(19) Europäisches Patentamt
European Patent Office
Office européen des brevets

(11) Publication number: 0 273 655 B1

(12) # EUROPEAN PATENT SPECIFICATION

(45) Date of publication of patent specification: **17.06.92**

(51) Int. Cl.5: **C08F 210/18**

(21) Application number: **87311162.9**

(22) Date of filing: **18.12.87**

The file contains technical information submitted after the application was filed and not included in this specification

(54) **Ethylene copolymers.**

(30) Priority: **19.12.86 US 944384**

(43) Date of publication of application: **06.07.88 Bulletin 88/27**

(45) Publication of the grant of the patent: **17.06.92 Bulletin 92/25**

(84) Designated Contracting States: **AT BE DE ES FR GB IT LU NL SE**

(56) References cited:
**EP-A- 0 035 242**
**EP-A- 0 069 951**
**EP-A- 0 223 394**
**GB-A- 2 047 254**
**US-A- 4 306 041**

(73) Proprietor: **EXXON CHEMICAL PATENTS INC.**
**1900 East Linden Avenue**
**Linden New Jersey 07036(US)**

(72) Inventor: **Welborn, Howard Curtis**
**1952 Vermont Avenue**
**Houston, TX 77019(US)**
Inventor: **Austin, Richard Graham**
**4810 River Hill Drive**
**Kingwood, TX 77345(US)**

(74) Representative: **Dew, Melvyn John et al**
**Exxon Chemical Limited Exxon Chemical Technology Centre P.O. Box 1**
**Abingdon Oxfordshire, OX13 6BB(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates in general to polyolefin polymers and in particular to polyethylene copolymers, terpolymers, and higher interpolymers formed from ethylene and 1,5-hexadiene(s) and to methods for preparing such polymers.

Polymers of ethylene and alpha, omega dienes (diolefins) are available but generally have broad structural property characteristics which detract from their overall performance. Thus, an improved ethylene/alpha, omega diene copolymer is needed which has a structural configuration that contributes to improved properties such as toughness, tear resistance, melt flow processability, impact strength, and others. Although ethylene/alpha olefin polymers having improved properties have been suggested, there is no copolymer of ethylene and an alpha, omega diolefin in the prior art which has improved properties and may be prepared in various density ranges and physical states varying from amorphous to crystalline.

Prior art polymers have suffered from one or more difficulties affecting their physical properties. The difficulties include broadened molecular weight distributions, broadened composition distribution of comonomer, and inefficient distribution or dispersion of the comonomer along the polyethylene chain of the copolymer.

Broadened molecular weight distribution of a polymer strongly influences its melt flow properties and such polymers tend to have a high concentration of high molecular weight molecules making them subject to orientation. As a result, such resins produce strongly anisotropic physical properties in the machine versus transverse direction of a fabrication process and such properties are detrimental to a number of end use applications.

Broad molecular weight distribution resins also frequently contain a significant portion of quite low molecular weight material. These molecules almost invariably contain high concentrations of comonomer and therefore tend to be amorphous or of a low degree of crystallinity. Consequently, these materials exude to the surface of fabricated parts causing tackiness where not desired and/or interfere with other additives in the polymer designed according to the particular application. An example of this is the surface active property associated with slip agents in blown or cast film.

Most prior art copolymers tend to have a very broad composition distribution of comonomer i.e., the distribution of comonomer amount the polymer molecules being nonuniform, some molecules having a relatively high concentration of comonomer while others have a relatively low concentration of comonomer. This structural property of the prior art polymers allows that portion with low comonomer content to have a high melting point and vice versa leading to a broad melting range for the entire polymer composition. Of course the presence of a high melting component is disadvantageous for many applications where softness is desired and may lead to undesired stiffness. On the other hand, the presence of high comonomer content materials of low melting point frequently results in a high quantity of extractables.

Prior art materials are generally characterized by relatively inefficient use of comonomer moieties along the polyethylene chains. The distribution of the comonomer along the chain is very important in determining the efficiency of use of the comonomer and the resulting properties of the polymer, especially with respect to crystallizability of the polymer. Such prior art polymers tend to have a high degree of clustering of the comonomer moieties along the polyethylene chain. That is, the comonomer units are adjacent or nonisolated along the chain resulting in inefficient use of the comonomer since only a single polyethylene chain interruption results when several comonomer units are contiguous. This has extremely important implications in the total amount of comonomer required to achieve the desired crystallinity. Also, it is often disadvantageous to include unneeded portions of comonomer, especially when dealing with less available and more expensive diene comonomers. Frequently, the requirement to use a higher portion of comonomer also tends to force the comonomer into low molecular weight, high comonomer content ends of the molecular weight distribution. Accordingly, improved ethylene copolymers, terpolymers, and interpolymers in the entire range of amorphous to highly crystalline polymers is needed.

EP-A-223394 (Uniroyal) discloses a low molecular weight copolymers of ethylene and alpha-olefins (propylene) which may include non-conjugated polyenes include 1,4 hexadiene and 1,5 hexadiene. The extent and mode of incorporation of such polyenes is not disclosed.

US-A-4306041 disclosed an EPDM polymer in which the diene may be 1,5 hexadiene. Ziegler-Natta catalyst systems including those using vanadium or titanium are used. There is no disclosure of a catalyst system, process or polymer having particular cluster indices.

Even though recognized as desirable to incorporate a significant percentage of diene into an ethylene copolymer, catalyst systems which produce such polymers with narrow molecular weight distribution and/or narrow comonomer distribution are ineffective in incorporating dienes in any significant amount. Thus, there exists a need for an ethylene/alpha, omega diene copolymer wherein a significant percentage of the diene

is incorporated into the copolymer and the resulting copolymer has a narrow molecular weight distribution and narrow compositional distribution of comonomer.

There is a need for ethylene/alpha, omega diene copolymers with improved properties such as melt strength, toughness, and the like resulting from structural characteristics of the copolymer.

## Brief Description of the Drawings

Figure 1 is a graphical and verbal depiction of the concept of cluster index as defined hereinafter;

Figure 2 is a plot of the cluster index of a polymer of the invention and some commercial polymers against the mole percent of comonomers; this is intended to show the improved efficiency of the use of comonomer in the polymers of the invention;

Figure 3 is a plot of the molecular weight distribution ($M_w/M_n$) for an ethylene copolymer of the invention in comparison to a commercial polymer;

Figure 4 is a plot of the compositional distribution of a polymer of the invention in comparison to that for some commercial polymers;

Figure 5 is a plot evidencing the correlation of the elution temperature and mole percent comonomer (branches per 1000 carbon atoms) for the compositional distribution of the polymers;

Figure 6 is a plot of the DSC melting points for five commercial copolymers for comparison to the copolymers of the invention;

Figure 6A is a plot of the DSC melting points for two polymers of the invention in comparison to a polymer prepared by an art-taught process;

Figure 7 is a plot of the molecular weight distribution for two copolymers of the invention, comparing a copolymer having linear moleculars with a copolymer having long chain branching/intermolecular coupling, neither being crosslinked (gel).

## Summary of the Invention

The present invention provides an uncrosslinked polymer from the polymerisation of ethylene and at least one other polymerisable comonomer comprising 1,5-hexadiene including unsubstituted 1,5-hexadiene and 1,5 hexadiene substituted in the 3, 4 or 5 position and from 0 to 15 % of an alpha-olefin other than ethylene, said copolymer incorporating in its structure at least 3 mol % of said at least one polymerisable comonomer and having a cluster index determined using C13 NMR of $10[(X)-(EXE)] / [2(X)^2-(X)^3]$ of 9 or less wherein (X) is the mole % of total comonomer molecules in the polymer and EXE is the mole fraction of the triad segment of ethylene-comonomer-ethylene and having a Mw/Mn of 3.0 or less. The polymers are non-gel, uncrosslinked copolymers, terpolymers, and higher interpolymers having improved properties associated with their structural characteristics. The term copolymer is hereinafter used to refer to any and all of such polymers of ethylene, a 1,5-hexadiene, and optionally other polymerizable comonomers. The polymers tend to incorporate the 1,5-hexadiene comonomer as a cyclopentane ring connected in the polyethylene backbone at the 1 and 3 positions on the ring.

The polymers of the invention are also marked by having improved properties attributable to their narrow molecular weight distribution, composition distribution, and cluster index as hereinafter set forth.

## Description of the Preferred Embodiments

The present invention concerns an uncrosslinked polymer from the polymerization of ethylene and at least one other polymerizable comonomer comprising 1,5-hexadiene, said polymer incorporating in its structure at least 3 mole percent of said at least one polymerizable comonomer and having a cluster index of 9 or less.

A preferred embodiment of the present invention is also an uncrosslinked polymer composition of ethylene and 1,5-hexadiene, said copolymer having a molecular weight distribution ($M_w/M_n$) of 2.5 or less, more preferably 2.0.

A preferred embodiment of the present invention is also a polymer comprising ethylene and at least 2, advantageously at least 3 mole percent 1,5-hexadiene having a molecular weight of 500-1,000,000, a molecular weight distribution ($M_w/M_n$) of 3.0 or less, a composition distribution wherein at least 55 wt.%, preferably 65 wt.%, more preferably 70 wt.% of the polymer molecules have a comonomer content within 10% of the median comonomer content in mole percent of said copolymer composition, and a cluster index of 9 or less, preferably 7, more preferably 5 or less, said copolymer being comprised of linear molecules and being substantially devoid of long chain branching/intermolecular coupling and having substantially all

of said 1,5-hexadiene incorporated as cyclopentane structure I:

(I)

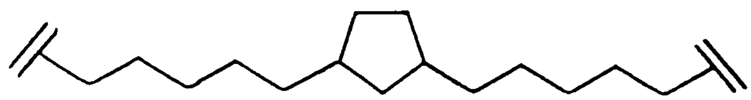

A preferred embodiment of the present invention is also a method for preparing copolymers of ethylene and 1,5-hexadiene comprising carrying out the polymerization in the presence of a metallocene/alumoxane catalyst system and forming an uncrosslinked ethylene/1,5-hexadiene copolymer.

The improved polymers (including copolymers, terpolymers and higher interpolymers) of the present invention represent a significant advance in the art of polymers made from ethylene and alpha, omega diolefins and optionally termonomers in that an uncrosslinked, non-gel product may be made, with or without intermolecular couplings, with or without long chain branching, and having significantly improved properties for the many uses to which polyethylene polymers and copolymers are known to be applicable.

The term copolymer is used herein as generic of all interpolymers. The 1,5-hexadienes of the invention include the compound 1,5-hexadiene per se, as well as those 1,5-hexadienes having substituents at the 3 and/or 4 carbon atoms of the diolefin. Preferably, the substituents on the diolefin at the 3 and 4 carbon atoms are alkyl substituents, more preferably lower alkyl substituents. Suitable alkyl substituents for the diolefin are methyl, ethyl, propyl, butyl, isopropyl, isobutyl, tertbutyl, amyl, hexyl, cyclopentyl or cyclohexyl. Also usable in the invention are the 1,5-hexadienes having such substituents in the 5 position such as 5-methyl-1,5-hexadiene.

The ethylene copolymers of the invention, in fact the entire unmodified reactor product, (including higher interpolymers) are, unlike certain products of the prior art, uncrosslinked copolymers which are soluble in refluxing xylene or boiling xylene. In particular, they are at least 98% soluble in refluxing xylene in accordance with ASTM D-2765, a test for determining extractables in a polymer. It was unexpected that such polymers could be prepared from ethylene and the alpha-omega dienes of the invention wherein the polymers were both uncrosslinked and had advantageous structural characteristics which provide good physical properties.

Copolymer compositions of the invention may be formed in either batch or continuous processes so as to provide an entire copolymer composition from the polymerization wherein the composition has the desirable properties as described herein. That is, an entire polymerization product may be produced as the copolymer of the invention or by the method of the invention wherein the polymer formed has the desirable structural and physical characteristics of the invention. That is, the copolymers of the invention include an entire or unmodified polymerization product from the polymerization of ethylene and a 1,5-hexadiene. The polymers of the invention include those formed by any polymerization process so long as the polymer achieved has the physical and structural properties outlined herein and set forth in the claims. A preferred procedure for obtaining the polymers of the invention is by the polymerization process using a metallocene/alumoxane catalyst system. Such catalyst systems use a metallocene catalyst of a metal of Group IVB, VB, and/or VIB of the Periodic Table in conjunction with an alumoxane material.

By way of explanation, a copolymer having a median (equal amount greater and less than) comonomer content of 2.0 mole percent would have 55 weight percent (preferably 65, more preferably 70 weight percent) of its composition with a comonomer content of 1.0 to 3.0 mole percent.

The ethylene copolymers of the invention have improved properties resulting especially from the more efficient use of diene comonomer in controlling the crystallizability of the polymer. That is, the efficient use of the diene comonomer comprises an improved isolation of the comonomer molecules along the polyethylene chain as not previously achieved for such ethylene copolymers. Accordingly, the polymers of the present invention not only have especially good application for those uses previously employing such polymers, but also have excellent overall physical properties marking a significant improvement over those materials previously available. The improved properties of the invention result from the isolated dispersion of the diene comonomer and other comonomers along the sequence of the polymer molecule of the invention.

Another preferred embodiment copolymer of the present invention has a distribution wherein at least 55 weight percent of the copolymer molecules are within 50 percent of the median comonomer content in mole percent, said copolymer being formed by polymerization in the presence of a catalyst system comprising a

metallocene of a metal of Group IVB, VB, and VIB of the Periodic Table and an alumoxane or reaction product thereof.

The unsaturated copolymer products of the present invention comprise batchwise or continuously produced bulk polymer compositions having the properties and characteristics described herein. That is, the entire/unmodified polymerization product has the advantageous properties.

The copolymer compositions of the invention may be prepared from the polymerization of ethylene and at least one comonomer. The at least one comonomer comprises, that is always includes some (or all) of the 1,5-hexadienes.

The diene comonomers incorporated in the polymers of the invention may be in small or large quantity relative to the amount of ethylene in the polymer. In one embodiment of the invention, the polymers of the invention contain at least 3 mole percent total comonomer based on the moles of ethylene and comonomers. This generally limits the density to a number below .930 g/cm$^3$, preferably below 0.92 g/cm$^3$ depending on the copolymers chosen and the method of incorporation. Thus, where only a two component polymer composition is formed from ethylene and the diene, at least about 3 mole percent diene units and no more than about 97 mole percent ethylene units are present. For terpolymers and higher interpolymers of the invention, only about 0.01 mole percent or more, preferably about 0.1 mole percent or more, more preferably 1 mole percent or more of the diene need be incorporated so long as the total incorporation of comonomers [diene and other(s)] is at least 3 mole percent for this embodiment.

Despite incorporation of at least 3 mole percent comonomer units in one embodiment of the polymer compositions of the invention the polymers nevertheless have a low cluster index and preferably other characteristics described herein. The total comonomer content of the polymers of the invention may be the predominant portion of the polymer. Preferably, especially for solid polymers, the ethylene units are the predominant component on a molar basis.

In one preferred embodiment of the present invention the polymers of the invention have improved properties attributable to the more uniform content of diene and other comonomers among the polymer molecules.

In contrast to the prior art polymers, the copolymers, terpolymers, and other interpolymers of the present invention exhibit very little clustering of the comonomer molecules along the polyethylene chain both with respect to the diene comonomer and any other polymerizable comonomer formed in the polyethylene chain. As a result, the use of comonomers in forming the copolymers of the invention is very efficient in controlling crystallizability, wards against formation of high comonomer content/low molecular weight ends, reduces cost, and improves properties.

In a preferred embodiment of the present invention, the copolymers of the invention have very narrow composition distribution of comonomer. That is, the copolymers have much more uniform distribution of comonomer among the molecules thereby largely avoiding the problem presented by broad composition distribution resins.

In another preferred delineation of the invention, the copolymers of the invention have improved properties resulting from the more consistent size of polymer molecules not achieved in the prior art. This aspect of the more preferred embodiment is generally referred to as the improved molecular weight distribution or ratio of the weight average molecular weight to number average molecular weight of the polymer material.

Also in this preferred embodiment of the present invention, the copolymers of the invention exhibit relatively narrow molecular weight distribution. That is, they have a relatively low ratio of weight to number average molecular weight. In other words, the concentration of very high molecular weight molecules and very low molecular weight molecules is decreased over prior art unsaturated polymers. The absence of the high molecular weight molecules reduces the tendency for orientation in fabrication processes and increases isotropic machine/transverse direction physical properties. The absence of low molecular weight molecules (low tail) in the copolymers of the invention reduces the tendency to form tacky surfaces and otherwise interfere with surface active agents in certain applications of the copolymers of the present invention.

Polymers of the prior art do not have the structure and corresponding properties of the polymers of the invention. That is, they lack the low cluster index for ethylene copolymers (including terpolymers and higher interpolymers) having therein at least 3 mole percent, preferably 5 mole percent, more preferably 10 mole percent comonomer units according to the invention. The absence of such structure is generally reflected in easily measured characteristics of the invention such as melting point temperature and the like. The prior art unsaturated polymers also generally lack narrow molecular weight distribution and narrow comonomer distribution.

The polymers of the present invention are capable of being fabricated into a wide variety of articles, as

is known for homopolymers of ethylene and copolymers of ethylene and higher alpha-olefins.

The polymers of the invention may vary in density across a broad scale from essentially amorphous materials to highly crystalline materials. They may be liquids (such as for certain rubbers and lubricants and waxes) or solids.

The molecular weight of the copolymers of the invention may vary over a broad range. Preferably the polymers have a number average molecular weight of about 500 or higher, preferably 1000 or higher, more preferably about 10,000 or higher. Typically, materials used for elastomers applications are either copolyers or terpolymers (often with propylene monomer) in the density range of 0.86-0.87 g/cc. Typically, these polymers contain 30 weight percent or more of the comonomers and the balance ethylene. Frequently, the elastomers of the unsaturated polymers of the invention will have as much as 48 weight percent of the comonomer present.

The polymers of the present invention may also include plastomers in the density range of 0.87-0.900 g/cc and containing from 20-30 weight percent of comonomer. Also available in the polymers of the invention are the very low density polyethylene materials of density range 0.900-0.915 g/cc and having from 10-20 weight percent comonomer present.

The polymers of the invention may be formed as a linear low density polyethylene type polymer in the density range of 0.915 g/cc to 0.940 g/cc and containing from 5-10 weight percent of the comonomers. The polymers of the invention may also be used in the form of high density polyethylene having a density of about 0.940 g/cc and above and containing up to 5 weight percent comonomers. The unsaturated polymers of the invention may also form amorphous materials below a density of 0.86 g/cc including tackifier resins.

The polymers of the present invention may have further advantageous properties if they are of narrow molecular weight distribution and/or of narrow compositional distribution.

Sequence distributions, or the distribution of comonomer units along a polymer chain, in, e.g., linear low density polyethylenes is a factor affecting the cost of the polymer because it affects the amount of comonomer required to achieve a desired polymer density. If comonomer is efficiently incorporated, i.e., with little clustering of comonomer units, in a linear low density polyethylene, less comonomer is required to depress the density. Thus, the number of comonomer runs in a copolymer chain and the length of each run is significant in the structure of the polyethylene molecules and affects the physical properties of the polymer. The polymers of the present invention are marked by a relatively high number of single units of comonomer in the polymer chain relative to the number of units containing more than a single comonomer molecule in comparison to unsaturated polymers of the prior art.

The unsaturated ethylene polymers of the invention are hereinafter described by their "cluster index". This index reflects the degree to which the polymers of the invention have individual comonomer units dispersed along the polyethylene chain, preferably in favoring isolation of individual units over groups of two or more units. Given a minimum level of comonomer, the unsaturated ethylene polymers of the present invention are especially noted for their efficient use of comonomer molecules by having more isolated comonomer molecules along the polyethylene chain and fewer clusters of molecules of the comonomer in the polyethylene chain. That is, the unsaturated polymers of the present invention tend to deviate from random comonomer distribution in the direction of fewer contiguous comonomer sequences. Thus, the cluster index permits a quantitative evaluation of the deviation from a random distribution of comonomer in the polymer chain.

In the cluster index description given herein, there are two reference points. The reference point 0 describes a polymer which has only isolated comonomer insertions without any contiguous comonomer units in a cluster; of course this describes pure homopolymers also. The second reference point is the number 10 describing an ethylene copolymer having comonomer distribution that is exactly random (Bernoullian) and thus containing a predictable amount of contiguous comonomer units. Any polymer having a cluster index value greater than 10 contains proportionally more contiguous comonomer sequences than predicted by the random distribution. Any polymer having a cluster index value between 0 and 10 is indicated to have fewer contiguous sequences than a random distribution polymer (given a minimum of comonomer). These cluster index values may vary with the method of producing the polymer including the catalyst used and conditions of polymerization.

The cluster index comparisons are best made for polymers having comparable comonomer mole contents or densities. The measurement of the clustering of the comonomer along the polyethylene chain in a given polymer may be determined by a study using carbon 13 nuclear magnetic resonance spectroscopy ($C^{13}$NMR). Using this tool for evaluation, the cluster index may be given as follows:

$$\text{Cluster index} = 10\,[(X) - (EXE)]/[2(X)^2 - (X)^3]$$

where (X) is the mole % of total comonomer molecules in the copolymer and EXE is the mole fraction of the triad segment of 3 monomer units containing ethylene-comonomer-ethylene. These concentrations are easily measured using $C^{13}$NMR.

The basis for the cluster index is further explained and exemplified below by the followed discussion and in reference to drawing Figure 1.

Referring now to drawing Figure 1 the cluster index may be derived as follows, using the reference point 10 as random clustering expected in a polymerization and the reference point 0 as that point for no clustering in a polymer (no units of more than one comonomer molecule contiguous). Accordingly,

$$\text{Cluster index} = 10 - 10 \times \frac{[(EXE)_{observed} - (EXE)_{random}]}{[(X) - (EXE)_{random}]}$$

where "X" is the mole % comonomer in the ethylene copolymer and EXE is the corresponding triad configuration of a single comonomer molecule contiguous to two ethylene molecules (units).

The term $(EXE)_{random}$ serves as a reference point and its value can be calculated from any suitable statistical model. In this case the Bernoullian model was chosen. For the Bernoullian model

$$(EXE)_{random} = [1 - X]^2[X].$$

Thus, substituting this value of $(EXE)_{random}$ in the formula for cluster index above gives:

$$\text{Cluster index} = 10\ [(X) - (EXE)_{observed}]/[2(X)^2 - (X)^3]$$

Accordingly, it can be readily seen from drawing Figure 1 that those polymers having more comonomer clustering than a random distribution appear to the left of the reference point 10 and those having less comonomer clustering than a random distribution appear between 0 and 10.

In Figure 2, polymers are plotted according to their cluster index as described for Figure 1 and using the vertical axis to plot mole percent of comonomer of the polymer samples. It is readily apparent from drawing Figure 2 that those polymers of the invention have a reduced cluster index (for a given density comonomer content) over polymers of the prior art such as those commercial polymers plotted and appearing near or to the left of reference point 10 (random clustering). The technique of using the $C^{13}$NMR to obtain the information for cluster index is known to the skilled artisan.

Also shown for comparison in Figure 2 is the cluster index of Dowlex 2088 octene LLDPE copolymer (Resin 9), Dowlex 2517 octene LLDPE copolymer (Resin 10), and Union Carbide 7099 hexene LLDPE copolymer (Resin 11).

The cluster index improvement in the polymers of the invention versus polymers of the prior art is detectable at 3 mole percent comonomer content, readily discernable at 5 mole percent, and remarkable at 10 mole percent or higher.

The above described cluster index may be considered to be of the first order or based on the total number of comonomer units less the isolated (EXE) comonomer units. A higher order cluster index can also be measured and calculated as based primarily on the occurrence of dimer segments (EXX) or (XXE) as observed. This measurement is somewhat more discriminating at low comonomer mole percents (about 3). Thus an EXX index may in like fashion be calculated as

$$\text{EXX Index} = 10 - 10\ \frac{(EXX)\ observed - (EXX)\ Bernoullian}{(EXX)\ Bernoullian}$$

Since (EXX) Bernoullian = 2 [E] $[X]^2$ and the (EXX) observed is based on both (EXX) and XXE) units, readily measured by $C^{13}$NMR, the EXX index is readily achieved. For such index a totally random polymer is measured as 10, a totally dimerless polymer is 0 (no contiguous XX), and a polymer increasingly deficient in solitary units (EXE) will approach 20.

The EXX index is a second measure of polymer structure based directly on dimers and higher orders of

contiguous (EXX and XXE) observed; it may be used independently or together with the cluster index (EXE) to distinguish polymers.

The EXX index for commercial resins 3, 5 and 6 in the Table herein are 7.3, 12.4, and 15.0. Compare the terpolymer resin of Example 2 of the invention which at 3.9 mole percent comonomer has an EXX index of only 8.2.

The ethylene polymers of the present invention are preferably marked by a relatively narrow molecular weight distribution in comparison to prior art polymers. The molecular weights and molecular weight distributions were determined using Waters 150C Gel Permeation Chromatographic Instruments. These instruments were equipped with refractive index detectors operated at 145°C and at a solvent flow rate of 1 milliliter per minute. The solvent used was ultra-high purity grade 1,2,4-trichlorobenzene obtained from Burdick and Jackson Company. Prior to use, the solvent was filtered through a 0.5 micrometer filter and stabilized with 120 ppm BHT. Three Waters styragel columns were used with nominal porosities of 500, 10,000, and 1,000,000 angstroms. (1 angstrom equals $10^{-8}$ cm) Each polymer sample was dissolved in trichlorobenzene solvent at 145°C to a concentration level of 0.1 weight percent and thereafter filtered through a 0.5 micrometer porous metal filter. About 300 microliters of this solution was then injected into the gel permeation chromatograph. Analysis time was typically 45 minutes. Calibration of the instrument for molecular weight determination was accomplished with the use of narrow molecular weight distribution polystyrene standards obtained from Toyo Soda Manufacturing Company. Sixteen of the standards were used ranging in molecular weight from 526 - $5.2 \times 10^6$. Molecular weight distributions of these standards were listed at 1.0-1.15 as measured by the ratio of weight average molecular weight to number average molecular weight. These polystyrene molecular weight data were then converted to a polyethylene basis with the use of the Mark-Houwink equation and the use of the following constants:

for polyethylene $K = 5.17 \times 10^{-4}$, $a = 0.70$

for polystyrene $K = 2.78 \times 10^{-4}$, $a = 0.70$.

Each sample was run twice and the calculated results averaged to yield the molecular weight information reported. The molecular weight distribution of the resin of Example 1 below was plotted for comparison on the same plot with that for Exxon LL3001 linear low density polyethylene resin mole percent comonomer on a scale of the log of molecular weight versus weight percent of the polymer in the molecular weight range. As can be seen from drawing Figure 3 the polymer of the invention has a strictly narrower molecular weight distribution than the commercially available linear low density polyethylene.

The polymers of the present invention preferably also have a narrow distribution of comonomer amongst molecules of the polymer in comparison to prior art polymers. For comparison, drawing Figure 4 reflects the narrow distribution of the unsaturated polymer of Example 1 in comparison to the relatively broad comonomer distribution polymers of the prior art. In Figure 4 the weight percent of copolymer (having a given comonomer content) is plotted against an elution temperature which directly reflects comonomer content. A better understanding of this preferred embodiment of the polymers of the present invention will be had by a review of Figure 4 and the following discussion.

Crystalline copolymers may be fractionated by comonomer content over a temperature range from 0-120°C in tetrachloroethylene solvent. The compositions of the fractions of the solution are determined and a solution temperature versus composition calibration curve has been constructed based on the data obtained. Using this calibration curve, the temperature scale of the solubility distribution curve can be converted to a composition scale and a composition distribution curve is thus obtained as in drawing Figure 4.

A machine has been assembled to automatically determine the solubility distribution curve of a crystalline copolymer. In the measuring instrument, a steel column is packed with small mesh glass beads and immersed in an oil bath whose temperature can be programmed over a temperature range from about 0°C-150°C. The tetrachloroethylene solvent may be prevented from boiling by operating the instrument at 3.03 Bar (3 atmospheres) pressure under an automatic regulator. A weighed amount of sample, usually about 1.6 grams, is placed in a sample preparation chamber, sealed, and repeatedly evacuated and filled with argon. A metered volume of solvent is then pumped into the sample preparation chamber where it is stirred and heated to obtain a solution of 1 percent concentration. A metered volume of this solution, usually about 100 $cm^3$ is then pumped into the packed column which has been thermostated at a high temperature of usually at least 120°C.

The polymer solution sample is subsequently crystallized by cooling the polymer in the column to 0°C at a programmed rate of 5°C per hour. The column was then maintained at 0°C for at least an hour. Thereafter, the elution stage of the determination is started by pumping pure solvent through the column at a rate of 6 $cm^3$ per minute. Effluent from the column passes through the reheater where it is heated to 120°C before passing through an IR detector used to measure the absorbance of the effluent stream. The

infrared absorption of the polymer carbon hydrogen stretching bands at 2960 centimeter$^{-1}$ serves as a continuous measure of the relative concentration of polymer in the effluent. After passing through the infrared detector the temperature of the effluent is reduced to 110° C and the pressure is reduced to 1.01 Bar (1 atmosphere) before passing the stream into an automatic fraction collector. In the elution stage, the pure solvent is pumped through the column set at 0° C for one hour. This serves to flush polymer that has not crystallized during the crystallization stage out of the column so that the relative percent of uncrystallized polymer can be determined from the infrared trace. The temperature is then programmed upward at 10° C per hour to 100° C and at 20° C per hour from 100° C to 120° C.

The compositions of fractions obtained from the various polymers were determined by infrared spectroscopy. The IR compositions are obtained from the intensity of the 1378cm$^{-1}$ methyl band, the thickness of the sample, and a calibration curve based on samples whose compositions were determined independently by $C^{13}$NMR. No corrections for methyl polymer end groups was made in obtaining compositions from infrared data.

Figure 5 is a plot of the elution temperature versus the comonomer content in mole percent comonomer (branches per 1000 carbon atoms) for the fractions of the sample. The curve "A" has been drawn through the points. Thus, curve A may be used as a correlation between elution temperature and composition of the polymer for temperatures greater than 0° C. The calibration curve is most accurate for fractions with number average molecular weights, $M_n \geqq 10,000$ as determined by size exclusion chromatography.

As seen in drawing Figure 4, samples of polymers tend to have a peak at about 0° C elution temperature. This small peak represents the fraction of total polymer that is not crystallizable at the lowest temperature of the experiment (about 0° C).

In summary, the device and procedure described provide a plot of relative weight percent of polymer versus elution temperature which in turn may be correlated to composition and mole percent comonomer (branches per 1000 carbon atoms) in the polymer chain. Accordingly, drawing Figure 4 is an effective comparison of the comonomer distribution of the unsaturated polymers of the invention to that for certain commercial polymers. As can readily be seen, the composition distribution of the polymer of the invention example is quite narrow in comparison.

Comonomers (termonomers) other than dienes of the invention include polymerizable comonomers such as acids, esters and other olefins. Suitable olefins include the alpha olefins such as propylene, butene, hexene, octene, 4-methyl-pentene-1, and others. According to the invention, the alpha olefin content of the ethylene copolymers is from 0 to 15 weight percent, preferably less than 10 weight percent.

In forming the polymers of the present invention it may be necessary to purify, or isolate the diene and other, optional comonomers of the invention in order to obtain incorporation thereof during polymerization. One such recommended technique is passing the comonomer, especially the diene, over alumina to remove extraneous materials.

Figures 6 and 6A show the melting point by differential scanning calorimetry (DSC) results for the resins of the invention in comparison to some commercial resins. Melting point distributions were determined using a Perkin Elmer DSC-7 operated in the following fashion: About 5-6 mg of sample was heated to 160° C and held at that temperature for 5 minutes. The sample was then cooled at 10° C per minute to a temperature of 0° C and reheated at 10° C per minute. The melting distributions reported here were collected during this reheating at 10° C per minute.

Concentrations of unsaturation in ethylene based polymers was determined by comparisons of IR spectra of brominated versus original polymer specimens utilizing the following bands:

vinylene - 965 cm$^{-1}$
vinyl - 909 cm$^{-1}$
vinylidene - 888 cm$^{-1}$

Various analyses of the copolymers of the invention and polymers formed by the method of the invention disclose that such copolymers have a significant predominance of ring addition of the 1,5-hexadiene versus 1,2 addition which tends to lead to long chain branching and/or intermolecular coupling. A predominance of 1,2 addition can in fact lead to crosslinking of the copolymer as found in the prior art. All of the polymers of the present invention are essentially entirely uncrosslinked, non-gel materials.

The degree of intermolecular coupling and/or long chain branching of the polymers of the invention may vary from a copolymer composition which is substantially devoid of such branching and coupling and has all linear molecules to the composition which has a high degree of long chain branching and intermolecular coupling without being crosslinked. Whether the copolymers of the invention formed by the process of the invention are a completely linear or set of molecules or a composition having long chain branching to any of various degrees and/or intermolecular coupling, the polymers are in any case not a crosslinked product and are soluble in refluxing xylene in accordance with recognized methods. That is, substantially all of, usually

greater than 98% of, the copolymers of the invention are soluble in refluxing xylene.

A better understanding of the present invention will be had by a review of the following examples taken in conjunction with the drawing fibres. The best mode of the invention is described herein.

The unsaturated polymers of the present invention are those having the narrow cluster index and preferably having the additional described structure of molecular weight distribution and comonomer distribution as well as properties herein described. Such polymers may be prepared by any of the known techniques of polymerization including solution, high pressure and gas phase polymerisation processes.

The polymers of the invention may be formed by the use of catalyst systems of the metallocene type. Hence the invention provides an uncrosslinked polymer from the polymerisation of ethylene and at least one other polymerisable comonomer comprising 1,5-hexadiene including unsubstituted 1,5-hexadiene and 1,5 hexadiene substituted in the 3,4 or 5 position and from 0 to 15 % of an alpha olefin (other that ethylene), said copolymer incorporating in tis structure at least 3 mole percent of said at least one polymerisable comonomer and having a cluster index using a Bernoullian model of EXE triad segments as reference as herein described of 9 or less.

That is, cyclopentadienylide catalyst systems using a metallocene complex in conjunction with an alumoxane cocatalyst or reaction product thereof are suitable for preparing polymers of the invention. The metallocene catalyst may be represented by the general formula $(C_p)_mMR_nR'_p$ wherein $C_p$ is a substituted or unsubstituted cyclopentadienyl ring; M is a Group IVB, VB, or VIB transition metal; R and R' are independently selected halogen, hydrocarbyl group, or hydrocarboxyl groups having 1-20 carbon atoms; m = 1-3, n = 0-3, p = 0-3, and the sum of m + n + p equals the oxidation state of M. Various forms of the catalyst system of the metallocene type may be used for polymerization to achieve polymers of the present invention including those of the homogeneous or the heterogeneous, supported catalyst type wherein the catalyst and alumoxane cocatalyst are together supported or reacted together onto an inert support for polymerization by gas-phase, high pressure, or solution polymerization.

The cyclopentadienyls of the catalyst may be unsubstituted or substituted with hydrogen or hydrocarbyl radicals. The hydrocarbyl radicals may include alkyl, alkenyl, aryl, alkylaryl or arylalkyl radicals containing from 1-20 carbon atoms or 2 carbon atoms joined together to form a $C_4$-$C_6$ ring. Exemplary hydrocarbyl radicals include methyl, ethyl, propyl, butyl, amyl, isoamyl, hexyl, isobutyl, heptyl, octyl, nonyl, decyl, cetyl, 2-ethylhexyl or phenyl. Exemplary halogen substituents include chlorine, bromine, flourine and iodine and of these halogen atoms, chlorine is preferred. Exemplary hydrocarboxy radicals are methoxy, ethoxy, propoxy, butoxy or amyloxy. Illustrative, but non-limiting examples of the metallocene catalyst useful in preparing the polymers of the present invention include bis(cyclopentadienyl)titanium dimethyl, bis(cyclopentadienyl)-titanium diphenyl, bis(cyclopentadienyl)zirconium dimethyl, bis(cyclopentadienyl)zirconium diphenyl, bis-(cyclpentadienyl)hafnium dimethyl and diphenyl, bis(cyclopentadienyl)titanium di-neopentyl, bis-(cyclopentadienyl)zirconium di-neopentyl, bis(cyclopentadienyl)titanium dibenzyl, bis(cyclopentadienyl)-zirconium dibenzyl, bis(cyclopentadienyl)vanadium dimethyl; the mono alkyl metallocenes such as bis-(cyclopentadienyl)titanium methyl chloride, bis(cyclopentadienyl)titanium ethyl chloride, bis-(cyclopentadienyl)titanium phenyl chloride, bis(cyclopentadienyl)zirconium methyl chloride, bis-(cyclopentadienyl)zirconium ethyl chloride, bis(cyclopentadienyl)zirconium phenyl chloride, bis-(cyclopentadienyl)titanium methyl bromide, bis(cyclopentadienyl)methyl iodide, bis(cyclopentadienyl)-titanium ethyl bromide, bis(cyclopentadienyl)titanium ethyl iodide, bis(cyclopentadienyl)titanium phenyl bromide, bis(cyclopentadienyl)titanium phenyl iodide, bis(cyclopentadienyl)zirconium methyl bromide, bis-(cyclopentadienyl)zirconium methyl iodide, bis(cyclopentadienyl)zirconium ethyl bromide, bis-(cyclopentadienyl)zirconium ethyl iodide, bis(cyclopentadienyl)zirconium phenyl bromide, bis-(cyclopentadienyl)zirconium phenyl iodide; the trialkyl metallocenes such as cyclopentadienyltitanium trimethyl, cyclopentadienyl zirconium triphenyl, and cyclopentadienyl zirconium trineopentyl, cyclopentadienylzirconium trimethyl, cyclopentadienylhafnium triphenyl, cyclopentadienylhafnium trineopentyl, and cyclopentadienylhafnium trimethyl.

Other metallocenes which may be usefully employed to prepare the polymers of the invention include the monocyclopentadienyls titanocenes such as, pentamethylcyclopentadienyl titanium trichloride, pentaethylcyclopentadienyl titanium trichloride; bis(pentamethylcyclopentadienyl) titanium diphenyl, the carbene represented by formula bis(cyclopentadienyl)titanium = $CH_2$ and derivatives of this reagent such as bis-(cyclopentadienyl)Ti = $CH_2.Al(CH_3)_3$, $(Cp_2TiCH_2)_2$, $Cp_2TiCH_2CH(CH_3)CH_2$, $Cp_2Ti\text{-}CHCH_2CH_2$; substituted bis(cyclopentadienyl)titanium (IV) compounds such as: bis(indenyl)titanium diphenyl or dichloride, bis-(methylcyclopentadienyl)titanium diphenyl or dihalides; dialkyl, trialkyl, tetra-alkyl and penta-alkyl cyclopentadienyl titanium compounds such as bis(1,2-dimethylcyclopentadienyl)titanium diphenyl or dichloride, bis-(1,2-diethylcyclopentadienyl)titanium diphenyl or dichloride and other dihalide complexes; silicon, phosphine, amine or carbon bridged cyclopentadiene complexes, such as dimethyl silyldicyclopentadienyl

titanium diphenyl or dichloride, methyl phosphine dicyclopentadienyl titanium diphenyl or dichloride, methylenedicyclopentadienyl titanium diphenyl or dichloride.

Additional zirconocene catalysts useful according to the present invention include bis(cyclopentadienyl) zirconium dimethyl; bis(cyclopentadienyl) zirconium dichloride, bis(cyclopentadienyl) zirconium methylchloride, pentamethylcyclopentadienyl zirconium trichloride, pentaethylcyclopentadienyl zirconium trichloride, bis(pentamethylcyclopentadienyl)zirconium diphenyl, the alkyl substituted cyclopentadienes, such as bis-(ethyl cyclopentadienyl)zirconium dimethyl, bis(β-phenylpropylcyclopentadienyl)zirconium dimethyl, bis-(methylcyclopentadienyl)zirconium dimethyl, bis(n-butyl-cyclopentadienyl)zirconium dimethyl, bis-(cyclohexylmethylcyclopentadienyl)zirconium dimethyl, bis(n-octyl-cyclopentadienyl)zirconium dimethyl, and haloalkyl and dihalide complexes of the above; di-alkyl, trialkyl, tetra-alkyl, and penta-alkyl cyclopentadienes, such as bis(pentamethylcyclopentadienyl) zirconium di-methyl, bis(1,2-dimethylcyclopentadienyl)-zirconium dimethyl and dihalide complexes of the above; silicone, phosphorus, and carbon bridged cyclopentadiene complexes such as dimethylsilyldicyclopentadienyl zirconium dimethyl or dihalide, and methylene dicyclopentadienyl zirconium dimethyl or dihalide, and methylene dicyclopentadienyl zirconium dimethyl or dihalide, carbenes represented by the formula $Cp_2Zr=CHP(C_6H_5)_2CH_3$, and derivatives of these compounds such as $Cp_2ZrCH_2CH(CH_3)CH_2$.

Bis(cyclopentadienyl)hafniun dichloride, bis(cyclopentadienyl)hafnium dimethyl and bis-(cyclopentadienyl)vanadium dichloride are illustrative of other metallocenes.

Various inorganic oxide supports may be used for supported catalyst systems to prepare polymers of the present invention. The polymerizations are generally carried in the temperature range of about 0-160°C or even higher but this range is not meant to be exclusive for preparing the polymers of the invention which may be prepared by any technique resulting in the structure set forth. Atmospheric, sub-atmospheric, or super-atmospheric pressure conditions may exist for the polymerization using the metallocene catalyst described above. It is generally preferred to use catalyst compositions at a concentration so as to provide from 1 ppm to 5000 ppm, most preferably 10 ppm to 300 ppm, by weight of transition metal based on the weight of monomers in the polymerization of the ethylene polymers.

A slurry polymerization process may generally use sub-atmospheric or super-atmospheric pressures and temperatures in the range of 40-110°C. In a slurry polymerization, a suspension of solid, particulate polymer is formed in a liquid polymerization medium to which ethylene and comonomers and often hydrogen along with catalyst are added. The liquid employed in the polymerization medium can be alkane or cycloalkane, of an aromatic hydrocarbon such as toluene, ethylbenzene or xylene. The medium employed should be liquid under the conditions of polymerization and relatively inert. Preferably, hexane or toluene is employed.

In a modification, polymers of the present invention may be formed by gas-phase polymerization. A gas-phase process utilizes super-atmospheric pressure and temperatures in the range of 50°-120°C. Gas-phase polymerization can be performed in a stirred or fluidized bed of catalyst and product particles in a pressure vessel adapted to permit the separation of product particles from unreacted gases. Thermostated ethylene, comonomer (including diene), hydrogen and an inert diluent gas such as nitrogen can be introduced or recirculated so as to maintain the particles at a temperature of 50°-120°C. Triethylaluminum may be added as needed as a scavenger of water, oxygen, and other adventitious impurities. Polymer product can be withdrawn continuously or semi-continuing at a rate such as to maintain a constant product inventory in the reactor. After polymerization and deactivation of the catalyst, the product polymer can be recovered by any suitable means. In commercial practice, the polymer product can be recovered directly from the gas phase reactor, freed of residual monomer with a nitrogen purge, and used without further deactivation or catalyst removal. The polymer obtained can be extruded into water and cut into pellets or other suitable comminuted shapes. Pigments, antioxidants and other additives, as is known in the art, may be added to the polymer.

The molecular weight of polymer product obtained in accordance with this invention can vary over a wide range, as low as 500 up to 2,000,000 or higher and preferably 1,000 to 500,000.

For the production of polymer product having a narrow molecular weight distribution, it is preferable to deposit only one metallocene on to the inert porous support material and employ said support metallocene together with the alumoxane as the polymerization catalyst.

It is highly desirable to have for many applications, such as extrusion and molding processes, polyethylenes which have a broad molecular weight distribution of the unimodal and/or the multimodal type. Such polyethylenes evidence excellent processability, i.e. they can be processed at a faster throughput rate with lower energy requirements and at the same time such polymers would evidence reduced melt flow perturbations. Such polyethylenes can be obtained by providing a catalyst component comprising at least two different metallocenes, each having different propagation and termination rate constants for ethylene

polymerizations. Such rate constants are readily determined by one of ordinary skill in the art.

The molar ratio of the metallocenes, such as, for example, of a zirconocene to a titanocene in such catalysts, can vary over a wide range, and in accordance with this invention, the only limitation on the molar ratios is the breadth of the Mw distribution or the degree of bimodality desired in the product polymer. Desirably, the metallocene to metallocene molar ratio will be 1:100 to 100:1, and preferably 1:10 to 10:1.

## Examples

In the Examples following the alumoxane employed was prepared by adding 76.5 grams ferrous sulfate heptahydrate in 4 equally spaced increments over a 2 hour period to a rapidly stirred 2 liter round-bottom flask containing 1 liter of a 13.1 weight percent solution of trimethylaluminum (TMA) in toluene. The flask was maintained at 50°C and under a nitrogen atmosphere. Methane produced was continuously vented. Upon completion of the addition of ferrous sulfate heptahydrate, the flask was continuously stirred and maintained at a temperature of 50°C for 6 hours. The reaction mixture was cooled to room temperature and was allowed to settle. The clear solution containing the alumoxane was separated by decantation from the insoluble solids.

Molecular weights were determined on a Water's Associates Model No. 150C GPC (Gel Permeation Chromatography). The measurements were obtained by dissolving polymer samples in hot trichlorobenzene and filtered. The GPC runs are performed at 145°C in trichlorobenzene at 1.0 ml/min flow using styragel columns from Perkin Elmer, Inc. 0.1 percent solutions (300 microliters of trichlorobenzene solution) were injected and the samples were run in duplicate. The integration parameters were obtained with a Hewlett-Packard Data Module.

## Catalyst Preparation

### Catalyst X

10 g of a high surface area (Davison 952) silica, dehydrated in a flow of dry nitrogen at 800°C for 5 hours, was slurried with 50 $cm^3$ of toluene at 25°C under nitrogen in a 250 $cm^3$ round-bottom flask using a magnetic stirrer. 25 $cm^3$ of methyl alumoxane in toluene (1.03 moles/liter in aluminum) was added dropwise over 5 minutes with constant stirring to the silica slurry. Stirring was continued for 30 minutes while maintaining the temperature at 60°C at which time the toluene was decanted off and the solids recovered. To the alumoxane, treated silica was added dropwise over 5 minutes, with constant stirring 25.0 $cm^3$ of a toluene solution containing 0.200 grams of bis(n-butyl-cyclopentadienyl) zirconium dichloride. The slurry was stirred an additional 1/2 hour while maintaining the temperature at 60°C and thereafter the toluene was decanted and the solids recovered and dried in vacuo for 4 hours. The recovered solid was neither soluble nor extractable in hexane. Analysis of the catalyst indicated that it contained 4.5 weight percent aluminum and 0.63 weight percent zirconium.

## Example 1 (Diluent Polymerization):

A 1-liter stainless steel pressure vessel, equipped with an incline blade stirrer, an external water jacket for temperature control, a septum inlet and vent line, and a regulated supply of dry ethylene and nitrogen, was dried and deoxygenated with a nitrogen flow. 500 $cm^3$ of dry, degassed toluene and 50 $cm^3$ of purified 1,5-hexadiene was injected directly into the pressure vessel. 10.0 $cm^3$ of 0.785 molar (in total aluminum) methyl alumoxane in toluene was injected into the vessel by a gas tight syringe through the septum inlet and the mixture was stirred at 1,200 rpm's and 70°C for 5 minutes at 0 bar (gauge) of nitrogen. Bis(n-butylcyclopentadienyl) zirconium dichloride (0.10 mg) dissolved in 0.10 ml of dry, distilled toluene was injected through the septum inlet into the vessel. After 1 minute, ethylene at 3.445 Bar (gauge) (50 psig) was admitted while the reaction vessel was maintained at 70°C. The ethylene was passed into the vessel for 15 minutes at which time the reaction was stopped by rapidly venting and cooling. 13.1 gms of ethylene/1,5-hexadiene copolymer was recovered after evaporation of the liquid components under nitrogen.

## Example 1A (Diluent Polymerization):

A 1-liter stainless pressure vessel, equipped with an incline blade stirrer, an external water jacket for temperature control, a septum inlet and vent line, and a regulated supply of dry ethylene and nitrogen, was dried and deoxygenated with a nitrogen flow. 250 $cm^3$ of dry, degassed toluene and 80 $cm^3$ of purified 1,5-hexadiene was injected directly into the pressure vessel. 10.0 $cm^3$ of 0.785 molar (in total aluminum) methyl alumoxane in toluene was injected into the vessel by a gas tight syringe through the septum inlet and the mixture was stirred at 1,200 rpm's and 72 °C for 5 minutes at 0 Bar (gauge) of nitrogen. Hydrogen at 0.01378 Bar (gauge) (0.2 psig) was introduced into the reactor. Bis(n-butylcyclopentadienyl) zirconium dichloride (0.10 mg) dissolved in 0.10 ml of dry, distilled toluene was injected through the septum inlet into the vessel. After 1 minute, ethylene at 2.4115 Bar (gauge) (35 psig) was admitted while the reaction vessel was maintained at 72 °C. The ethylene was passed into the vessel for 6 minutes at which time the reaction was stopped by rapidly venting and cooling. 15.2 gms of ethylene/1,5-hexadiene copolymer was recovered after evaporation of the liquid components under nitrogen.

Example 1B (Diluent Polymerization):

A 1-liter stainless pressure vessel, equipped with an incline blade stirrer, an external water jacket for temperature control, a septum inlet and vent line, and a regulated supply of dry ethylene and nitrogen, was dried and deoxygenated with a nitrogen flow. 500 $cm^3$ of dry, degassed hexane was injected directly into the pressure vessel. 10 $cm^3$ of 1,5-hexadiene was then charged into vessel with a gas tight syringe. 10.0 $cm^3$ of 0.785 molar (in total aluminum) methyl alumoxane in toluene was injected into the vessel by a gas tight syringe through the septum inlet and the mixture was stirred at 1,200 rpm's and 60 °C for 5 minutes at 0 Bar (gauge) of nitrogen. Hydrogen at 0.01378 Bar (gauge) (0.2 psig) was introduced into the reactor. Bis-(n-butylcyclopentadienyl) zirconium dichloride (1.0 mg) dissolved in 1.0 ml of dry, distilled toluene was injected throught the septum inlet into the vessel. After 1 minute, ethylene at 4.4785 Bar (gauge) (65 psig) was admitted while the reaction vessel was maintained at 60 °C. The ethylene was passed into the vessel for 10 minutes at which time the reaction was stopped by rapidly venting and cooling. 24.6 gms of ethylene/1,5-hexadiene copolymer was recovered after evaporation of the liquid components under nitrogen.

Example 2A (Gas Phase Polymerization):

Polymerization was performed in the gas phase in a 1-liter autoclave reactor equipped with a paddle stirrer, an external water jacket for temperature control, a septum inlet and a regulated supply of dry nitrogen, ethylene, hydrogen and 1-butene. The reactor, containing 40.0 g of granular polypropylene (> 600 micrometer particle size) which was added to aid stirring in the gas phase, was dried and degassed thoroughly at 85 °C. As a scavenger, 0.3 $cm^3$ of a 20 wt.% triethylaluminum solution in hexane was injected through the septum inlet, into the vessel using a gas-tight syringe in order to remove traces of oxygen and water. The reactor contents were stirred at 120 rpm at 85 °C for 1 minute at 0 Bar (gauge) nitrogen pressure. 6.0 $cm^3$ of 1,5-hexadiene was injected by syringe. 500.0 mg of Catalyst X was injected into the reactor and the reactor was pressured to 13.78 Bar (gauge) (200 psig) with ethylene. The polymerization was continued for 30 minutes while maintaining the reaction vessel at 85 °C and 13.78 Bar (gauge) (200 psig) by constant ethylene flow. The reaction was stopped by rapidly cooling and venting. 4.3 grams of ethylene/1,5-hexadiene copolymer was recovered. The polyethylene was recovered by sieving out the fraction which had a particle size greater than 350 micronmeter diameter.

Example 2B (Comparative):

Polymerization was performed in the gas phase in a 1-liter autoclave reactor equipped with a paddle stirrer, an external water jacket for temperature control, a septum inlet and a regulated supply of dry nitrogen, ethylene, hydrogen and 1-butene. The reactor, containing 5.0 g of granular polypropylene (> 600 micrometer) which was added to aid stirring in the gas phase, was dried and degassed thoroughly at 60 °C with helium. The reactor contents were stirred at 600 rpm and 300.0 mg of powdered methyl alumoxane was injected using helium pressure. Powdered methyl alumoxane was prepared by evaporating the toluene solvent from a preparation of methyl alumoxane at 0.1 torr for 2 hours and grinding the glassy solid with a mortar and pestle in a helium atmosphere. The reactor was evacuated and refilled with ethylene at 0 Bar (gauge), and stirring was continued for one minute. With stirring, 2.0 $cm^3$ of a toluene solution of bis-(cyclopentadienyl) zirconium dimethyl (0.840 mg) was injected slowly into the reactor, using a syringe and needle which injected the solution over the stirring polymer-methylalumoxane mixture. The reactor was evacuated to $1.3 \times 10^{-3}$ Bar (gauge) (100 microns Hg) for 10 minutes at 60 °C to remove the toluene. (Complete removal of the toluene was later verified by recovering the 2 $cm^3$ toluene from the vacuum trap.) 3.0 $cm^3$ of liquid 1-butene was then injected into the stirring reactor followed directly by ethylene at 8.13 Bar (gauge) (118 psig). The reactor pressure was maintained at 8.13 Bar (gauge) (118 psig) by feeding

ethylene on demand for 30 minutes at 60 ° C. The polymerization was terminated by rapidly venting and cooling the reactor and exposing the reactor contents to air. 13.2 g of ethylene-1-butene copolymer was recovered.

The structural characterization of the polymers of the invention and the comparative product are set forth in the Table below. A review of the information and the Table discloses that the polymers of the invention have improved structural properties based upon their molecular weight distribution, and/or comonomer distribution, and/or cluster index. Furthermore, the copolymers of the invention are not gels but are boiling xylene-soluble polymers.

The polymers from Examples 1 and 1A have long chain branches including intermolecular coupling but are not crosslinked gels.

The copolymers from Examples 2 and 2A are uncrosslinked polymers, which, when analyzed show no detectable intermolecular coupling or long chain branching. In fact, as given in the description below, the polymers having long chain branching are readily discernible from those having substantially no intermolecular coupling or long chain branching. See Figure 7. Furthermore, applicants have found that the degree of long chain branching for the ethylene/1,5-hexadiene copolymers of the invention may be regulated by controlling reaction conditions, catalyst type, and portions of comonomers.

The storage (G') and loss (G") moduli of the polymers of Examples 1 and 2 were measured at 150 ° C and 200 ° C on a Rheometrics System-Four mechanical spectrometer to determine the presence of long chain branching in the polymer compositions as produced in the reactor. The two one-gram (approximately) samples were washed in a dissolve and precipitate process to deash and then stabilized with 1000 ppm BHT.

Three criteria are used to decide whether a PE resin contains long chain branching:

(i) Melt elasticity, which is high for long chain branched polymers and low for linear molecule polymers, was evaluated from storage moduli in the low frequency region.

(ii) Activation energy, which is about 14 Kcal/mole (58615 Joule/mole) for long chain branched polymers and about 6 Kcal/mole (25120 Joule/mole) for linear molecule polymers was calculated from the shifting factor of the G' and G" spectra at two different temperatures.

(iii) Thermorheological characteristics, which are complex for long chain branched polymers and simple for linear molecule polymers, were assessed by comparing the shifting factors at different frequencies (rotation).

The results given below clearly show that the copolymer of Example 1 has significant long chain branching and the copolymer of Example 2 is completely linear. The viscosity in the low frequency region and melt elasticity of the copolymer of Example 1 are much greater. The two resins have similar melt indices even though their structures are different. This phenomenon can be readily discerned by the high shear sensitivity for the long chain branched copolymer upon extrusion.

| Rheological Data | | | |
|---|---|---|---|
| | Melt Elasticity | Viscous Activation Energy (Kcal/mole) | Thermo-Rheological Characterization |
| Example 1 | High | More than 10 (41868 Joule/mole) | Complex |
| Example 2 | Low | About 6 (25120 Joule/mole) | Simple |

The polymers of the invention were tested for degree of unsaturation by an infrared procedure wherein concentrations of unsaturation in the ethylene-based polymers was determined by comparison of IR spectra of brominated versus original polymer specimens utilizing the following bands:

Vinylene - 965 centimeters$^{-1}$
Vinyl - 909 centimeters$^{-1}$
Vinylidene - 888 centimeters$^{-1}$

The procedure for determination of unsaturation is known to the skilled artisan.

Thus, the present invention constitutes a method and copolymer wherein the copolymer has either no long chain branching and intermolecular coupling or a controlled degree of intermolecular coupling without forming a crosslinked product. The copolymers of the invention have significant utility in the various applications to which ethylene polymers and copolymers are customarily assigned.

TABLE

| Resin | Comonomer Content (Mole %) Type | Amt. | Mw (10-3) | Mw/Mn | Comp. Distr. | Cluster Index | Melting Behavior Distr. | Peak m.p. (°C) |
|---|---|---|---|---|---|---|---|---|
| Example 1 | 1,5-hexadiene | 10.0 | 120.0 | 2.6 | Narrow | < 5 | Narrow | 103.6 |
| Example 2A | 1,5-hexadiene | 2.2(1) | 105.0 | 2.4 | Narrow | < 5 | Narrow | 125.5 |
| Example 2B (Comp.) | butene-1 | 9.3 | 49.7 | 4.5 | Broad | 5.0 | Broad | 98.9, 110, 120 |
| 3 | hexene-1 | 3.7 | 103.1 | 3.3 | Broad | 12.1 | Broad | 124.6 |
| 4 | octene-1 | 2.8 | 114.6 | 3.67 | Broad | 9.5 | Broad | 124.3 |
| 5 | butene-1 | 4.4 | 118.0 | 3.33 | Broad | 11.7 | Broad | 121.6 |
| 6 | butene-1 | 3.3 | 115.7 | 3.79 | Broad | 5.0 | Broad | 118.7 |
| 7 | 4-methyl-pentene-1 | 3.5 | 92.3 | 2.6 | Broad | - | Broad | 124.5 |
| 8 (LLDPE)(2) | butene-1 | 5.2 | 96.1 | 1.78 | Narrow | 9.6 | Narrow | 94.0 |

(1) Estimated from melting point (DSC)

(2) Laboratory prepared sample for vanadium oxychloride/ethylaluminum sesquichloride catalyst

## Claims

**1.** Uncrosslinked polymer from the polymerization of ethylene and at least one other polymerisable comonomer comprising 1,5-hexadiene including unsubstituted 1,5-hexadiene and 1,5 hexadiene substituted in the 3, 4 or 5 position and from 0 to 15 % of an alpha-olefin other than ethylene, said copolymer incorporating in its structure at least 3 mol % of said at least one polymerisable comonomer and having a cluster index determined using C13 NMR of $10[(X)-(EXE)] / [2(X)^2-(X)^3]$ of 9 or less wherein (X) is the mole % of total comonomer molecules in the polymer and EXE is the mole fraction of the triad segment of ethylene-comonomer-ethylene and having a Mw/Mn of 3.0 or less.

**2.** Polymer according to claim 1 incorporating in its structure at least 5 mole percent of said polymerisable comonomer.

**3.** Polymer according to claim 1 or claim 2 wherein said 1,5-hexadiene is incorporated in at least 0.1 mole percent, preferably at least 3 mole percent.

**4.** Polymer according to any of the preceding claims in which 1,5-hexadiene is incorporated in at least 5 mole percent.

**5.** Polymer according to any of the preceding claims wherein said at least one polymerisable comonomer consists essentially of said 1,5-hexadiene.

**6.** Polymer according to any of the preceding claims wherein said composition is greater than 98 weight % soluble in refluxing xylene.

**7.** Polymer according to any of claims 1 to 6 wherein the majority of said 1,5-hexadiene is incorporated in the polyethylene chain as cyclopentane structure I :

(I) 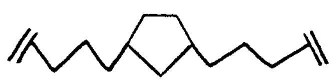 ,

and the polymer has a molecular weight ($M_n$) of 500 to 1,000,000.

**8.** Polymer according to claim 7 wherein the polymer has a molecular weight of 500-200,000 and is substantially entirely devoid of long chain branching.

**9.** Polymer according to any of the preceding claims having a cluster index of 5 or less.

**10.** Polymer according to any of the preceding claims having a composition distribution wherein at least 55 weight % of the copolymer composition molecules have a comonomer content within 50 % of the median comonomer content in mole percent of said copolymer preferably with at least 70 weight % of the copolymer molecules having a comonomer content within 50 % of the median comonomer content of said polymer.

**11.** Polymer according to any of claims 1 to 6 having a molecular weight of 1000 to 1,000,000, containing long chain branching/intermolecular coupling, and being substantially devoid of linear molecules.

**12.** Method for preparing polymers of ethylene and 1,5-hexadiene comprising carrying out the polymerisation in the presence of a metallocene/alumoxane catalyst system and forming an uncrosslinked ethylene/1,5-hexadiene copolymer composition having an alpha olefin content less than 15 weight percent, preferably by copolymerising 50-99 mole parts ethylene, 1-50 mole parts 1,5-hexadiene, and 0-50 mole parts polymerisable termonomer, said polymerisable termonomer being an alpha olefin.

**Revendications**

**1.** Polymère non réticulé résultant de la polymérisation d'éthylène et d'au moins un autre comonomère polymérisable comprenant le 1,5-hexadiène, à savoir le 1,5-hexadiène non substitué et un 1,5-hexadiène substitué en position 3, 4 ou 5, et 0 à 15 % d'une alpha-oléfine autre que l'éthylène, ledit copolymère renfermant dans sa structure au moins 3 moles % dudit comonomère polymérisable dont il existe au moins un représentant et ayant un indice d'agrégation égal ou inférieur à 9, déterminé par

$^{13}C$-RMN d'après le rapport $10[(X)-(EXE)]/[2(X)^2-(X)^3]$, où (X) désigne le pourcentage molaire du total des molécules de comonomère dans le polymère et EXE désignant la fraction molaire de la triade segmentaire éthylène-comonomère-éthylène et ayant un rapport Mp/Mn égal ou inférieur à 3,0.

**2.** Polymère suivant la revendication 1, renfermant dans sa structure au moins 5 moles % dudit comonomère polymérisable.

**3.** Polymère suivant la revendication 1 ou la revendication 2, dans lequel le 1,5-hexadiène est incorporé en proportion d'au moins 0,1 mole %, de préférence d'au moins 3 moles %.

**4.** Polymère suivant l'une quelconque des revendications précédentes, dans lequel le 1,5-hexadiène est incorporé en proportion d'au moins 5 moles %.

**5.** Polymère suivant l'une quelconque des revendications précédentes, dans lequel le comonomère polymérisable dont il existe au moins un représentant est constitué essentiellement dudit 1,5-hexadiène.

**6.** Polymère suivant l'une quelconque dos revendications précédentes, dans lequel la composition est soluble à plus de 98 % en poids dans le xylène au reflux.

**7.** Polymère suivant l'une quelconque des revendications 1 à 6, dans lequel la majorité du 1,5-hexadiène est incorporée dans la chaîne de polyéthylène sous forme de structure de cyclopentane I :

(I) 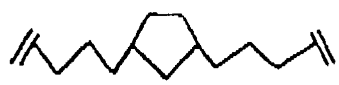

et le polymère a un poids moléculaire ($M_n$) de 500 à 1 000 000.

**8.** Polymère suivant la revendication 7, dans lequel le polymère a un poids moléculaire de 500 à 200 000 et est dépourvu en quasi-totalité de ramification à longue chaîne.

**9.** Polymère suivant l'une quelconque des revendications précédentes, ayant un indice d'agrégation égal ou inférieur à 5.

**10.** Polymère suivant l'une quelconque des revendications précédentes, ayant une distribution de composition selon laquelle au moins 55 % en poids des molécules de la composition du copolymère ont une teneur en comonomère dans des limites de 50 % de la teneur en comonomère médian en pourcentage molaire dudit copolymère, avec de préférence au moins 70 % en poids des molécules de copolymère présentant une teneur en comonomère dans des limites de 50 % de la teneur en comonomère médian dudit polymère.

**11.** Polymère suivant l'une quelconque des revendications 1 à 6, ayant un poids moléculaire de 1000 à 1 000 000, contenant une ramification à longue chaîne avec couplage intermoléculaire et étant principalement dépourvu de molécules linéaires.

**12.** Procédé de production de polymères d'éthylène et de 1,5-hexadiène, qui consiste à conduire la polymérisation en présence d'un système de catalyseur métallocène/alumoxane et à former une composition de copolymère réticulé éthylène/1,5-hexadiène ayant une teneur en alpha-oléfine inférieure à 15 % en poids, de préférence par copolymérisation de 50 à 99 parties molaires d'éthylène, 1 à 50 parties molaires de 1,5-hexadiène et 0 à 50 parties molaires de termonomère polymérisable, ledit termonomère polymérisable étant une alpha-oléfine.

**Patentansprüche**

**1.** Nicht vernetztes Polmyer aus der Polymerisation von Ethylen und mindestens einem anderen polymerisierbaren Comonomer umfassend 1,5-Hexadien einschließlich nicht-substitutiertes 1,5-Hexadien und in 3-, 4- oder 5-Stellung substituiertes 1,5-Hexadien und 0 bis 15 % eines anderen α-Olefins als Ethylen,

wobei das Copolymer in seiner Struktur mindestens 3 Mol.-% des mindestens einen polymerisierbaren Comonomeren enthält, einen Cluster-Index bestimmt durch C13 NMR von $10[(X)-(EXE)] / [2(X)^2-(X)^3]$ von 9 oder weniger besitzt, wobei (X) der Molprozentsatz der gesamten Comonomermoleküle in dem Polymer und EXE die Molfraktion des Triadesegments aus Ethylen-Comonomer-Ethylen ist, und ein Mw/Mn von 3,0 oder weniger aufweist.

**2.** Polymer nach Anspruch 1, das mindestens 5 Mol.-% des polymerisierbaren Comonomeren in seiner Struktur enthält.

**3.** Polymer nach Anspruch 1 oder Anspruch 2, in dem das 1,5-Hexadien in einer Menge von mindestens 0,1 Mol.-% und vorzugsweise mindestens 3 Mol.-% enthalten ist.

**4.** Polymer nach einem der vorangehenden Ansprüche, in dem 1,5-Hexadien in einer Menge von mindestens 5 Mol.-% enthalten ist.

**5.** Polymer nach einem der vorangehenden Ansprüche, bei dem das mindestens eine polymerisierbare Comonomer im wesentlichen aus 1,5-Hexadien besteht.

**6.** Polymer nach einem der vorangehenden Ansprüche, dessen Zusammensetzung zu mehr als 98 Gew.-% in am Rückfluß siedenden Xylol löslich ist.

**7.** Polymer nach einem der Ansprüche 1 bis 6, bei dem der überwiegende Anteil des 1,5-Hexadiens in der Polyethylenkette als Cyclopentanstruktur I:

(I) 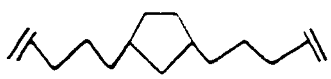

enthalten ist und das ein Molekulargewicht ($M_n$) von 500 bis 1 000 000 besitzt.

**8.** Polymer nach Anspruch 7, das ein Molekulargewicht von 500 bis 200 000 besitzt und im wesentlichen vollständig frei von langkettigen Verzweigungen ist.

**9.** Polymer nach einem der vorangehenden Ansprüche mit einem Cluster-Index von 5 oder weniger.

**10.** Polymer nach einem der vorangehenden Ansprüche mit einer Zusammensetzungsverteilung, bei der mindestens 55 Gew.-% der Copolymerzusammensetzungsmoleküle einen Comonomergehalt innerhalb 50 % des mittleren Comonomergehalts in Mol.-% des Copolymeren und vorzugsweise mindestens 70 Gew.-% der Copolymermoleküle einen Comonomergehalt innerhalb 50 % des mittleren Comonomergehalts des Polymeren besitzen.

**11.** Polymer nach einem der Ansprüche 1 bis 6 mit einem Molekulargewicht von 1000 bis 1 000 000, das langkettige Verzweigungen/intermolekulare Verkupplungen aufweist und im wesentlichen frei von linearen Molekülen ist.

**12.** Verfahren zur Herstellung von Polymeren aus Ethylen und 1,5-Hexadien, bei dem die Polymerisation in Gegenwart eines Metallocen/Alumoxan Katalysatorsystems durchgeführt und eine nicht-vernetzte Ethylen/1,5-Hexadien-Copolymerzusammensetzung mit einem $\alpha$-Olefingehalt von weniger als 15 Gew.-% gebildet wird, wobei vorzugsweise 50 bis 99 Molteile Ethylen, 1 bis 50 Molteile 1,5-Hexadien und 0 bis 50 Molteile polymerisierbares Termonomer copolymerisiert werden, wobei das polymerisierbare Termonomer ein $\alpha$-Olefin ist.

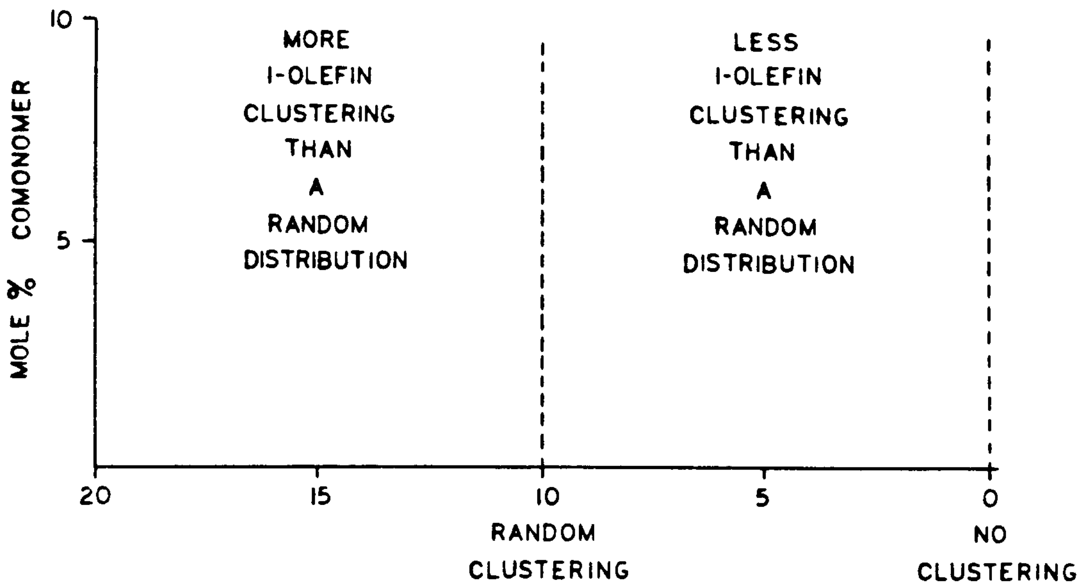
10
5
MOLE % COMONOMER
MORE
1-OLEFIN
CLUSTERING
THAN
A
RANDOM
DISTRIBUTION
LESS
1-OLEFIN
CLUSTERING
THAN
A
RANDOM
DISTRIBUTION
20
15
10
5
0
RANDOM
CLUSTERING
NO
CLUSTERING

FIG.1

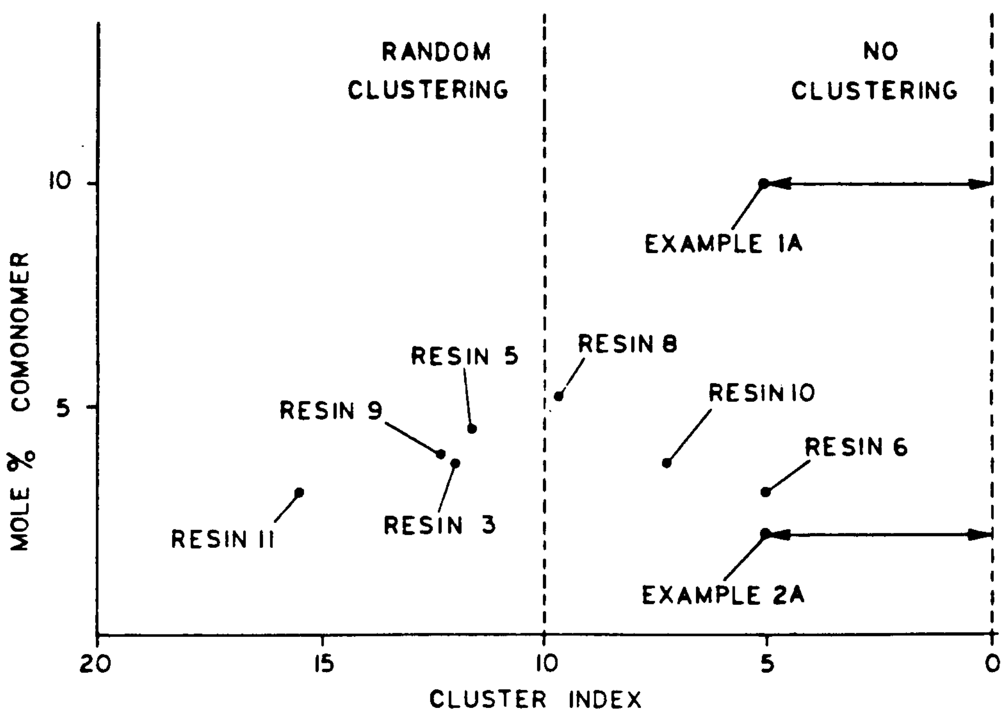
RANDOM
CLUSTERING
NO
CLUSTERING
10
5
MOLE % COMONOMER
EXAMPLE 1A
RESIN 5
RESIN 8
RESIN 9
RESIN 10
RESIN 6
RESIN 11
RESIN 3
EXAMPLE 2A
20
15
10
5
0
CLUSTER INDEX

FIG.2

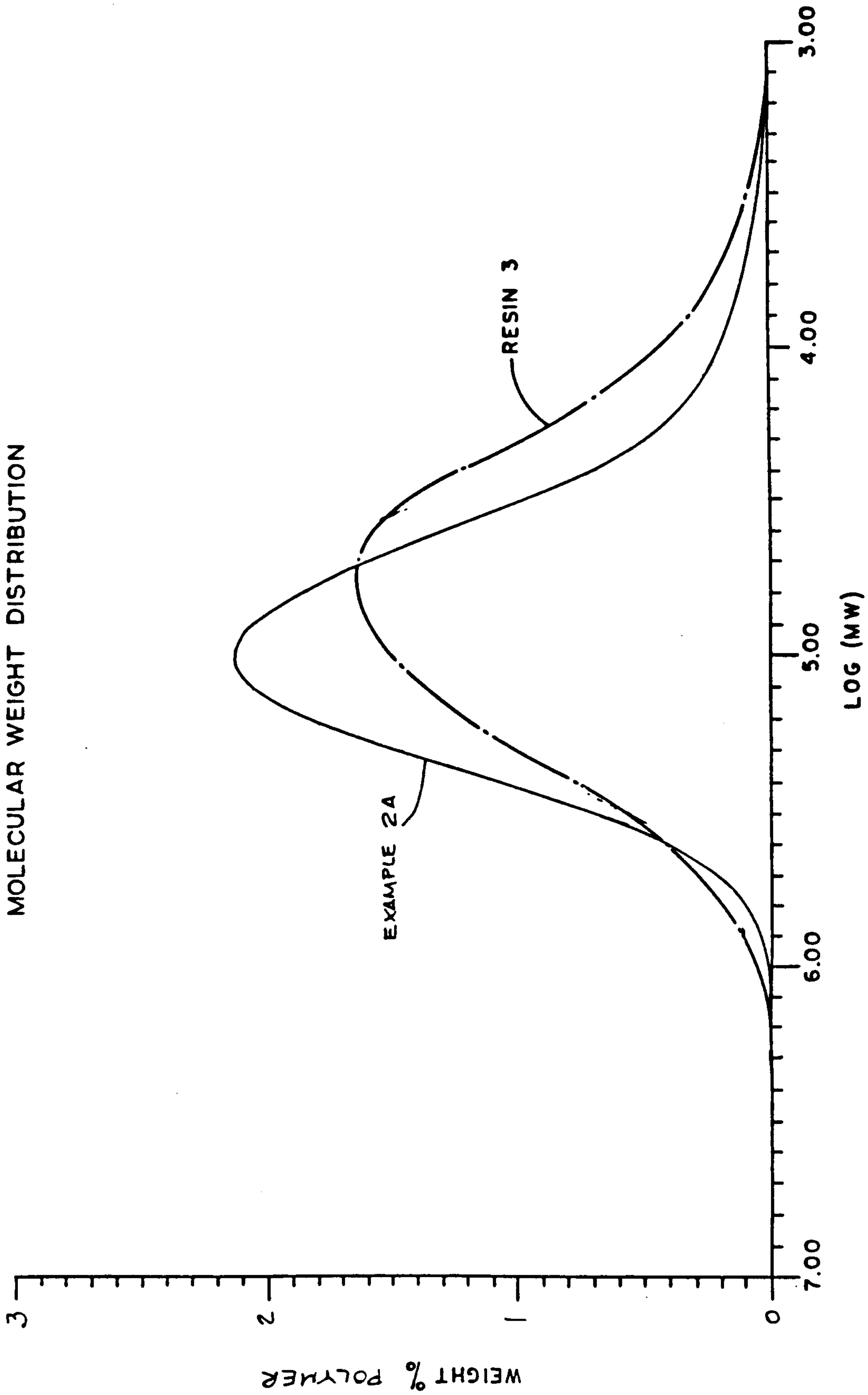
MOLECULAR WEIGHT DISTRIBUTION
RESIN 3
EXAMPLE 2A
WEIGHT % POLYMER
3
2
1
0
7.00
6.00
5.00
4.00
3.00
LOG (MW)

FIG.3

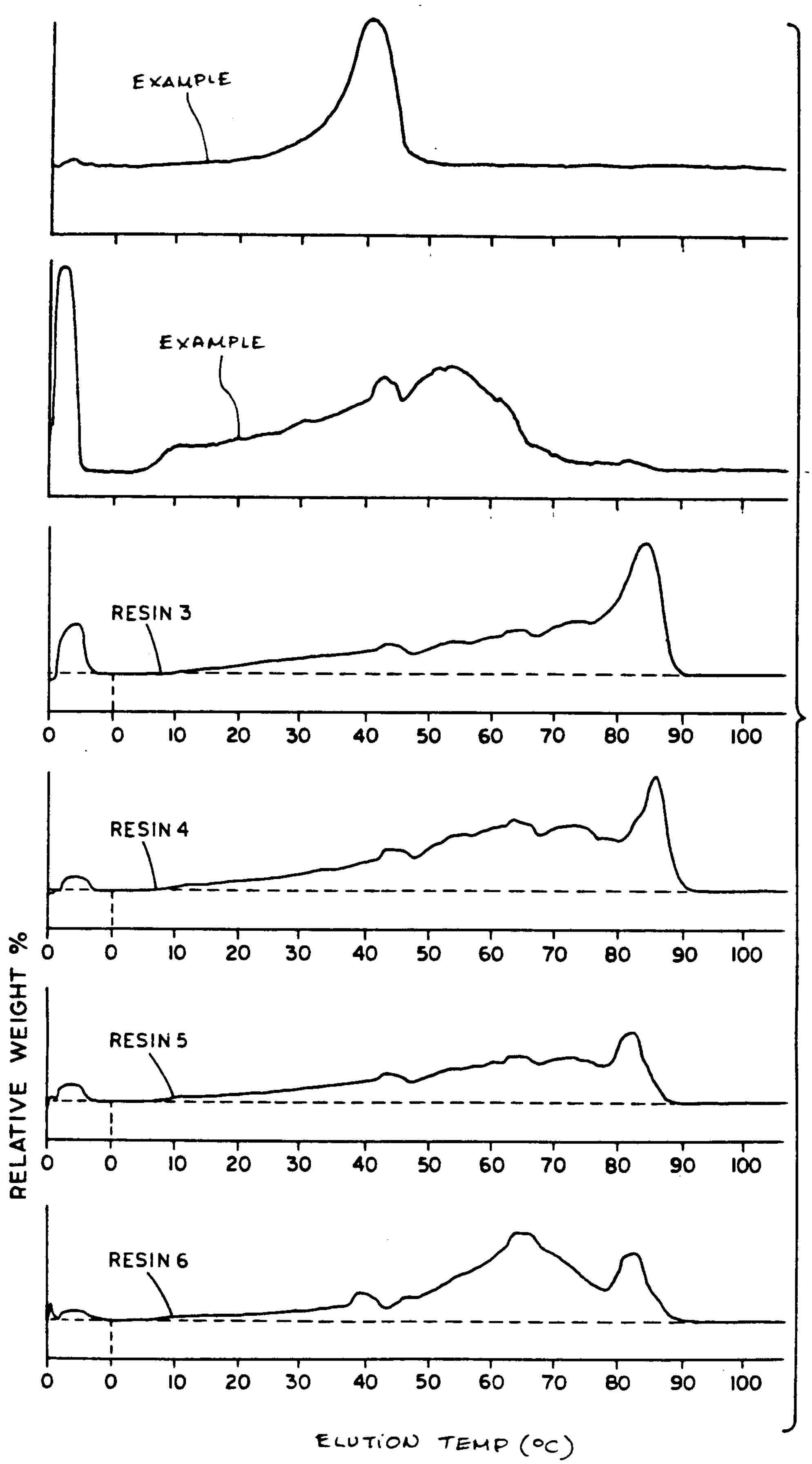
EXAMPLE
EXAMPLE
RESIN 3
RESIN 4
RESIN 5
RESIN 6
RELATIVE WEIGHT %
0
0
10
20
30
40
50
60
70
80
90
100
ELUTION TEMP (°C)

FIG.4

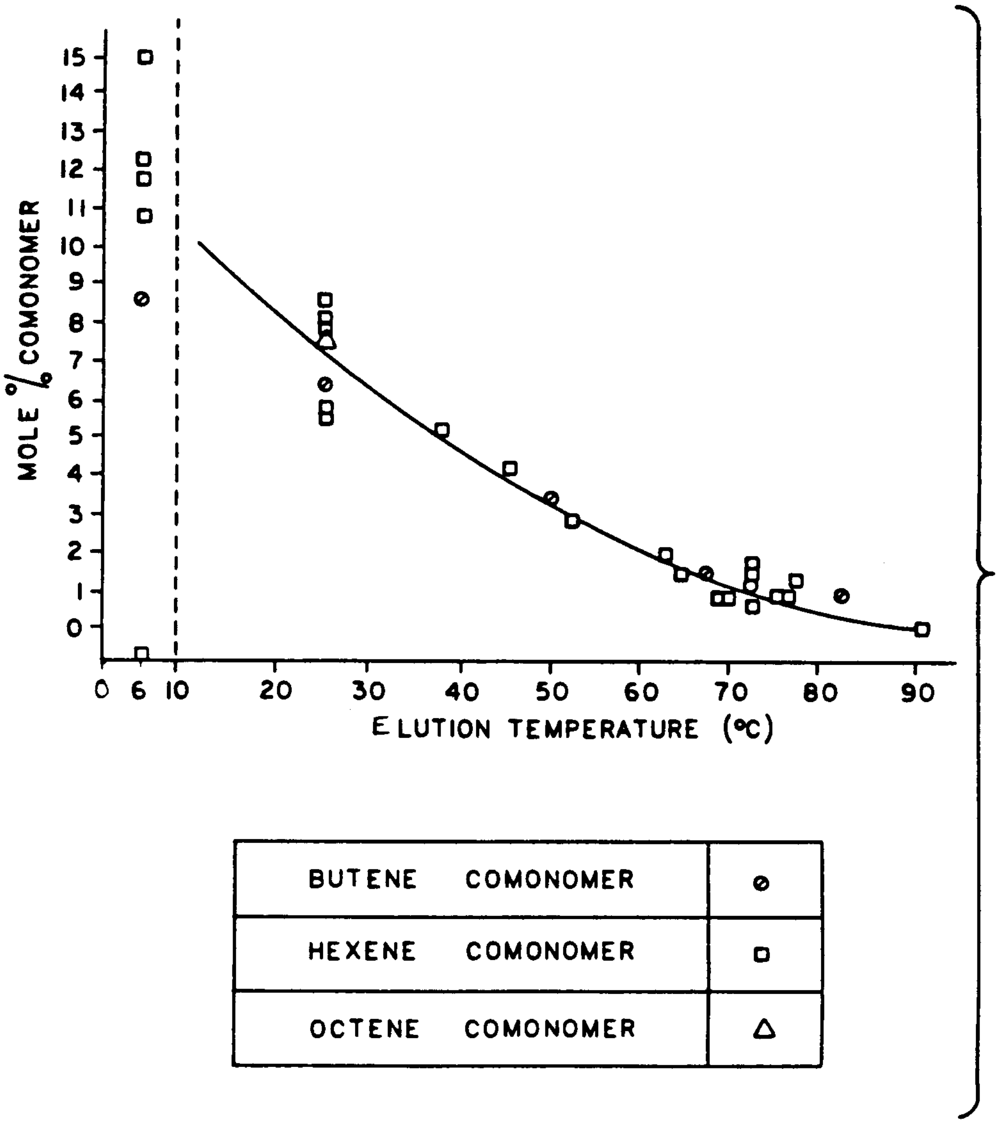
MOLE % COMONOMER
15
14
13
12
11
10
9
8
7
6
5
4
3
2
1
0
0 6 10 20 30 40 50 60 70 80 90
ELUTION TEMPERATURE (°C)
BUTENE COMONOMER
HEXENE COMONOMER
OCTENE COMONOMER

FIG.5

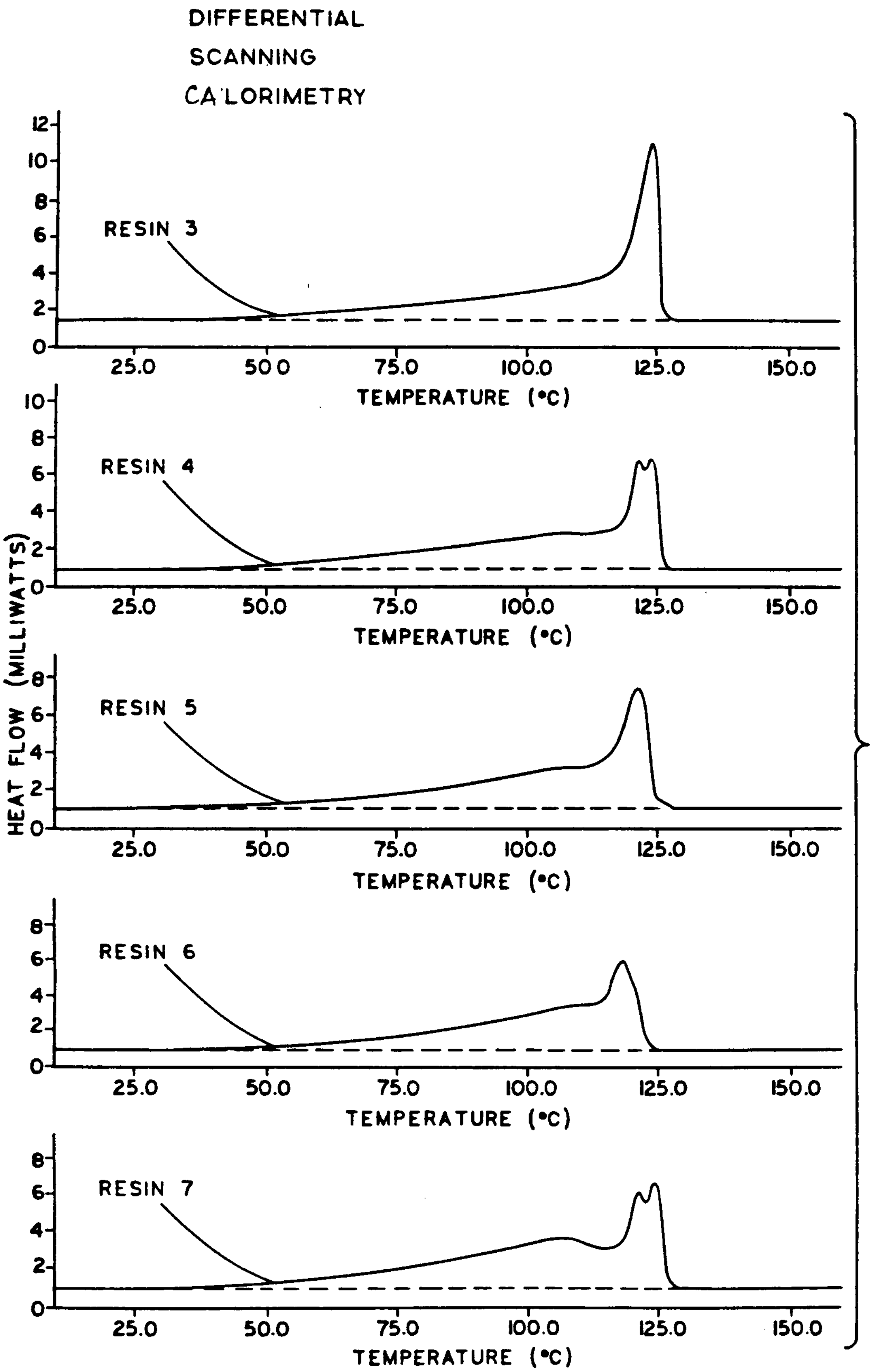
DIFFERENTIAL
SCANNING
CALORIMETRY
HEAT FLOW (MILLIWATTS)
RESIN 3
RESIN 4
RESIN 5
RESIN 6
RESIN 7
TEMPERATURE (°C)
25.0
50.0
75.0
100.0
125.0
150.0

FIG.6

FIG.6A

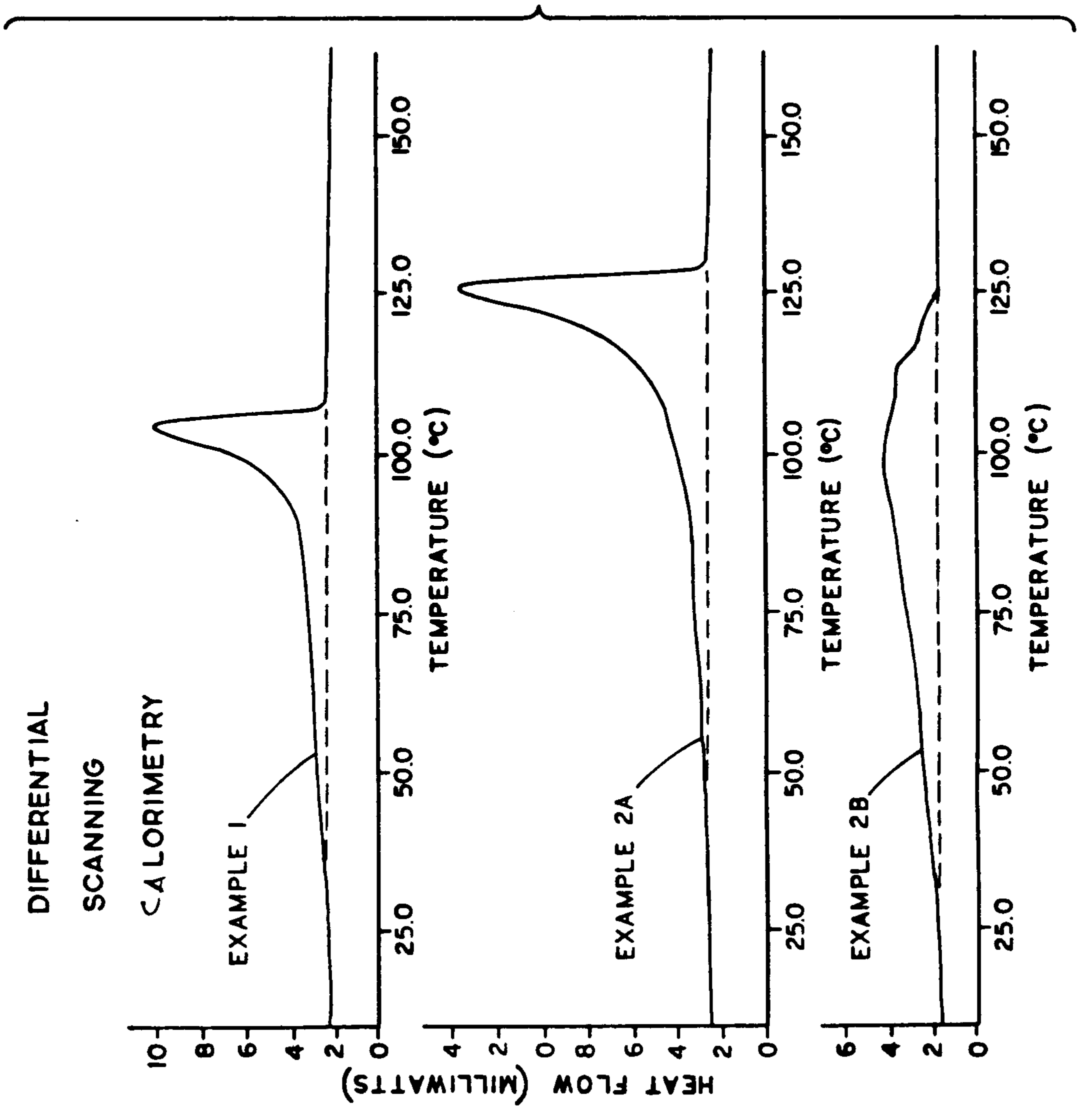
DIFFERENTIAL SCANNING CALORIMETRY
EXAMPLE 1
EXAMPLE 2A
EXAMPLE 2B
HEAT FLOW (MILLIWATTS)
TEMPERATURE (°C)
25.0
50.0
75.0
100.0
125.0
150.0

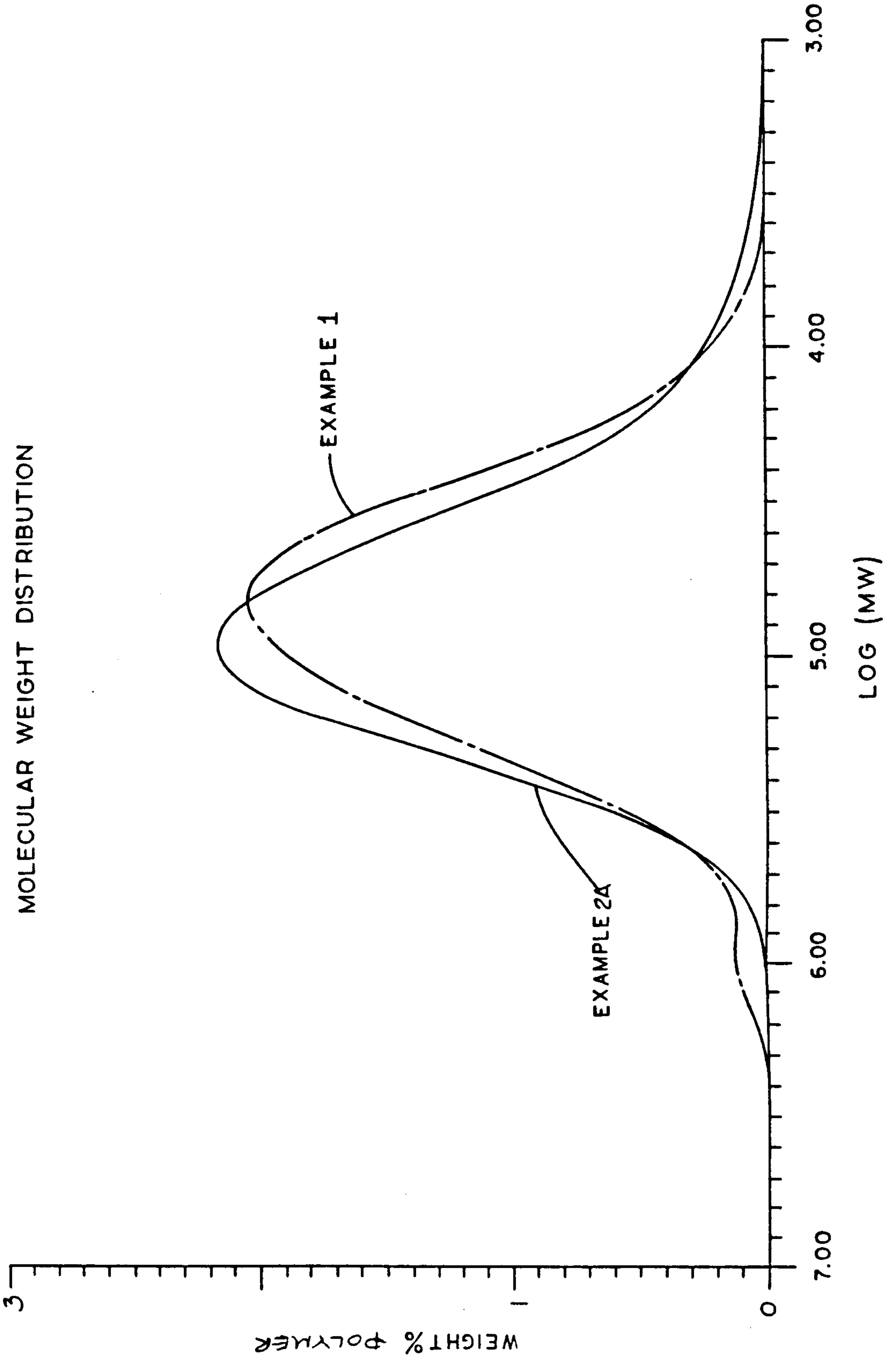
MOLECULAR WEIGHT DISTRIBUTION
EXAMPLE 1
EXAMPLE 2A
3.00
4.00
5.00
6.00
7.00
LOG (MW)
3
1
0
WEIGHT% POLYMER

FIG.7